# FASCICULE DE BREVET EUROPEEN

(11) **EP 2 569 178 B1**
(45) Date de publication et mention de la délivrance du brevet: **02.07.2014**
(21) Numéro de dépôt: 11723580.4
(22) Date de dépôt: 06.05.2011
(51) Int. Cl.: B60K 1/04, B62D 65/02, B23P 25/00

(54) **DISPOSITIF POUR LE RÉGLAGE EN POSITION ET LA FIXATION D'UN ORGANE DE VERROUILLAGE SUR UN SUPPORT AVEC RATTRAPAGE DE JEU**
VORRICHTUNG FÜR DIE POSITIONSEINSTELLUNG UND BEFESTIGUNG EINES VERRIEGELUNGSORGANS AUF EINEM TRÄGER MIT SPIELAUSGLEICH
DEVICE FOR THE POSITION ADJUSTMENT AND FIXATION OF A LOCKING MEANS ON A SUPPORT WITH COMPENSATION OF PLAY

(30) Priorité: 10.05.2010 FR 1053617
(43) Date de publication de la demande: 20.03.2013
(73) Titulaire: Renault S.A.S., 92100 Boulogne-Billancourt (FR)
(72) Inventeur: TREDAN, Eric, F-92200 Bagneux (FR)
(86) Numéro de dépôt international: PCT/FR2011/051029
(87) Numéro de publication internationale: WO 2011/141667

(56) Documents cités:
- FR-A1- 2 885 871
- FR-A1- 2 934 927
- FR-A1- 2 936 760

## Description

L'invention concerne un dispositif pour le réglage en position et la fixation d'au moins une première partie d'organe de verrouillage sur un support, ladite première partie d'organe de verrouillage étant du type comportant un socle dont la face interne est adaptée à être maintenue serrée en appui plan contre ledit support au moyen d'au moins un ensemble vis-écrou et un corps relié audit socle prévu pour coopérer avec une seconde partie d'organe de verrouillage solidaire d'une pièce à assembler sur ledit support, pour réaliser l'assemblage de ladite pièce sur ledit support.

L'invention s'applique plus particulièrement, mais non exclusivement, à la fixation des verrous de batterie de traction de véhicule automobile sur une caisse de véhicule automobile ou sur un cadre de batterie rapporté sur la caisse, en vue de l'assemblage de la batterie de traction sur la caisse de véhicule automobile ou sur le cadre rapporté sur la caisse.

On connaît de nombreux exemples d'agencements pour le montage d'une batterie de traction dans un véhicule automobile. Dans la plupart de ces agencements, la batterie est fixée rigidement, au moyen de verrous de fixation, soit sur un cadre qui la porte, destiné à être fixé la caisse du véhicule, soit directement sur la caisse du véhicule. Chaque verrou de fixation est en fait constitué d'un organe mâle solidaire d'un premier élément parmi la batterie et la caisse (ou le cadre), typiquement la batterie, et d'un organe femelle fixé sur le deuxième élément parmi la batterie et la caisse (ou le cadre), typiquement la caisse (ou le cadre), et prévu pour recevoir l'organe mâle de verrouillage en engagement mutuel pour assurer ainsi la fixation de la batterie sur la caisse (ou le cadre).

Une batterie conventionnelle forme un ensemble compact de masse élevée, pouvant peser plus de 200 kg, et doit donc être fixée par un nombre important de ces verrous de fixation sur la caisse de véhicule, ou sur le cadre rapporté sur la caisse. Ce nombre de verrous de fixation est typiquement supérieur à trois et, le plus souvent, au moins égal à quatre (voir par exemple FR-A-2 934 927).

Un inconvénient majeur des systèmes de fixation de ce type est qu'ils ne fonctionnent correctement qu'à la condition que le positionnement relatif des organes mâle et femelles, lors du montage de la batterie, soit parfaitement maîtrisé et reproductible d'un véhicule à l'autre. Il importe en particulier que les quatre points de maintien soient parfaitement alignés dans un plan Z, c'est-à-dire dans la direction d'engagement mutuel des organes de verrouillage.

En effet, si les quatre points de maintien ne sont pas coplanaires, un certain nombre de problèmes risquent de se poser. Notamment, la batterie peut être endommagée du fait qu'elle ne peut pas être déformée au-delà d'un certain seuil critique, susceptible de compromettre son intégrité physique. En outre, l'effort de verrouillage étant fonction de la distance entre les organes de verrouillage mâle et femelle correspondants, des dispersions en Z entre les quatre organes positionnés sur le support peuvent entraîner des problèmes de fiabilité sur le verrou de fixation présentant la distance la plus grande entre ses organes mâle et femelle lors du montage de la batterie sur le support.

Or, s'agissant de la caisse de véhicule, il existe d'importantes dispersions dimensionnelles susceptibles d'affecter le positionnement des quatre organes femelles de verrouillage dans un même plan. En cas de montage de la batterie sur un cadre, lors de la fixation de ce dernier sur la caisse de véhicule, le cadre et/ou la caisse se déforment, affectant de même la coplanarité des quatre organes femelles de verrouillage.

Compte tenu de ces contraintes de dispersions dimensionnelles, l'alignement en Z des (au moins) quatre organes de verrouillage sur la caisse (ou le cadre) est rendue problématique, dans la mesure où il est difficile de les positionner dans un même plan.

Dans ce contexte, l'invention a pour but de remédier à cet inconvénient, et de proposer un dispositif du type précité, qui permette de compenser de telles dispersions, et de réaliser simplement et aisément un positionnement des au moins quatre organes de verrouillage sur le support dans un même plan.

A cette fin, le dispositif de l'invention, par ailleurs conforme à la définition générique qu'en donne le préambule ci-dessus, est essentiellement caractérisée en ce qu'il comprend des moyens de mise en position adaptés à positionner et maintenir ladite première partie d'organe de verrouillage dans un plan de référence formé par trois autres premières parties d'organe de verrouillage correspondantes positionnées sur ledit support, et en ce que ledit ensemble vis-écrou comprend des moyens de rattrapage automatique de jeu entre ladite face interne dudit socle et ledit support lors du serrage dudit ensemble vis-écrou.

De préférence, lesdits moyens de rattrapage automatique de jeu comprennent un écrou mobile de rattrapage de jeu à filetages intérieur et extérieur de pas respectivement opposés vissé dans une première partie de l'ensemble vis-écrou comportant un écrou fixe de serrage solidaire dudit support au niveau d'une première partie dudit écrou fixe adaptée au filetage extérieur dudit écrou mobile, le filetage intérieur dudit écrou mobile étant adapté au filetage d'une vis de fixation formant une deuxième partie de l'ensemble vis-écrou, de sorte que ledit écrou mobile est adapté à se déplacer axialement dans ledit écrou fixe solidaire dudit support lors du vissage de ladite vis de fixation pour venir en butée par une de ses extrémités libres contre ledit socle traversé par ladite vis de fixation.

Avantageusement, ledit écrou fixe solidaire dudit support comprend une seconde partie adaptée au filetage de ladite vis de fixation, de sorte que ladite vis de fixation est adaptée à venir en prise avec ladite seconde partie dudit écrou fixe lorsque l'extrémité libre dudit écrou mobile est en butée avec ledit socle.

De préférence, ladite seconde partie dudit écrou fixe solidaire dudit support et ladite vis de fixation sont adaptés à définir un couple de serrage d'au moins 21 newtons-mètres.

Selon un mode de réalisation, lesdits moyens de mise en position comprennent un gabarit rigide adapté à être placé en regard du support et comprenant des zones d'appui coplanaires adaptées à venir en appui respectivement sur lesdites trois autres premières parties d'organes de verrouillage correspondantes positionnées sur ledit support et au moins une zone de maintien située dans le même plan que lesdites zones d'appui et destinée à positionner et maintenir ladite première partie d'organe de verrouillage à fixer sur ledit support dans ledit plan de référence.

Avantageusement, lesdites zones d'appui comprennent des moyens de fixation amovible adaptés à coopérer avec lesdites trois autres premières parties d'organe de verrouillage pour fixer de manière amovible ledit gabarit sur lesdites trois autres premières parties d'organe de verrouillage au niveau desdites zones d'appui respectives.

Avantageusement, ladite zone de maintien comprend des moyens de fixation amovible adaptés à coopérer avec ladite première partie d'organe de verrouillage pour fixer de manière amovible ladite première partie d'organe de verrouillage sur ledit gabarit sur ladite zone de maintien.

De préférence, ladite seconde partie d'organe de verrouillage comprend un organe mâle solidaire d'une batterie de traction d'un véhicule automobile et ladite première partie d'organe de verrouillage comprend un organe femelle prévu pour recevoir ledit organe mâle en engagement mutuel pour l'assemblage de ladite batterie de traction sur ledit support.

Ledit support peut comprendre une caisse de véhicule automobile ou un cadre de batterie fixé sur une caisse de véhicule automobile.

L'invention concerne encore un procédé pour le réglage en position et la fixation d'au moins une première partie d'organe de verrouillage sur un support, ladite première partie d'organe de verrouillage étant prévue pour coopérer avec une seconde partie d'organe de verrouillage solidaire d'une pièce à assembler sur ledit support, pour réaliser l'assemblage de ladite pièce sur ledit support, ledit procédé étant caractérisé en ce qu'il comprend une étape préalable consistant à fixer trois autres premières parties d'organes de verrouillage correspondantes sur ledit support, et en ce qu'il comprend les étapes suivantes consistant à maintenir en position ladite première partie d'organe de verrouillage dans un plan de référence formé par lesdites trois autres premières parties d'organes de verrouillage correspondantes préalablement positionnées sur ledit support et à fixer sur ledit support ladite première partie d'organe de verrouillage ainsi maintenue dans ledit plan de référence avec rattrapage automatique du jeu entre ledit support et ladite première partie d'organe de verrouillage, de sorte que ladite première partie d'organe de verrouillage est positionnée sur ledit support dans ledit plan de référence des trois autres premières parties d'organes de verrouillage préalablement positionnées sur ledit support.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue d'une partie du cadre de batterie sur lequel sont fixées trois premières parties d'organe de verrouillage constituant le plan de référence pour le montage de la batterie de traction;
- la Figure 2 est une vue du cadre de batterie de la figure 1 auquel est associé le gabarit de mise en position d'au moins une première partie d'organe de verrouillage supplémentaire, relativement au plan de référence constitué des trois autres premières parties d'organe de verrouillage préalablement fixées sur le cadre;
- la Figure 3 est une vue de détail illustrant le principe de fixation du gabarit sur les trois autres premières parties d'organe de verrouillage préalablement fixées sur le cadre ;
- la Figure 4 est une vue de détail du maintien sur le gabarit de la première partie d'organe de verrouillage supplémentaire destinée à être fixé sur le cadre, relativement au plan de référence constitué des trois premières parties d'organe de verrouillage déjà fixées sur le cadre ;
- la Figure 5 est une vue de détail illustrant le principe de la fixation sur le cadre avec rattrapage de jeu de cette première partie d'organe de verrouillage supplémentaire positionnée dans le plan de référence et maintenu à l'aide du gabarit;
- la Figure 6 est une vue de détail illustrant la position finale de cette première partie d'organe de verrouillage supplémentaire une fois fixée sur le cadre.

L'invention va donc être décrite en référence à l'application privilégiée, qui concerne la fixation de premières parties d'organe de verrouillage d'une batterie de traction, en l'occurrence les organes femelles, sur un support tel que la caisse d'un véhicule automobile ou un cadre rapporté sur la caisse. Ces organes femelles, une fois fixées sur le support, sont ensuite destinées à coopérer avec des secondes parties complémentaires d'organe de verrouillage fixées sur la batterie, en l'occurrence les organes mâles, pour réaliser le montage de la batterie sur le support.

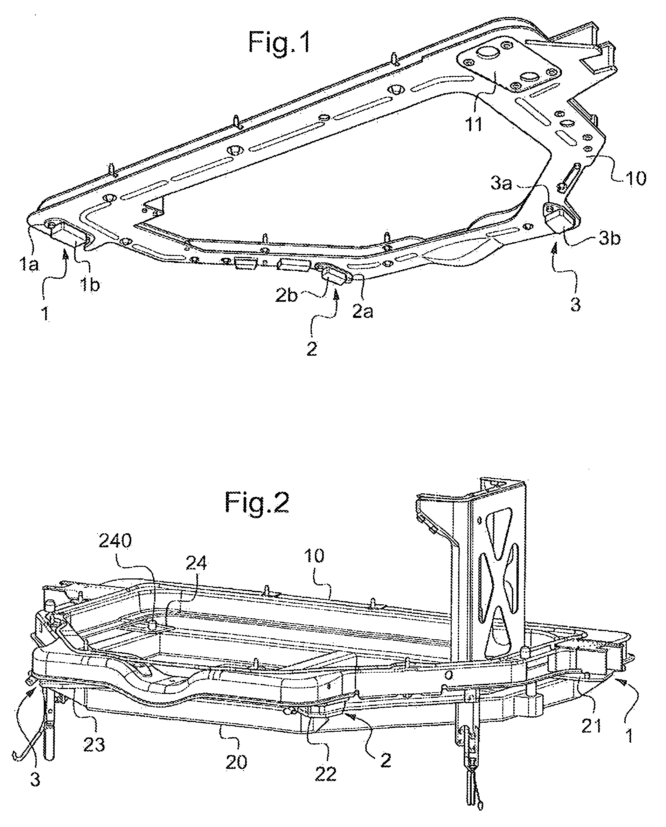

La figure 1 se rapporte plus particulièrement à un exemple de réalisation où le support est constitué par un cadre de batterie 10 destiné à être fixé sur une caisse de véhicule automobile. Cependant, le principe de l'invention n'implique pas nécessairement la présence d'un cadre de batterie et les premières parties d'organe de verrouillage dont il va être fait état ci-après pourraient alors être fixées directement sur la caisse de véhicule automobile.

L'invention part du principe qu'il est relativement aisé de positionner trois points distincts dans un même plan. Aussi, selon l'invention, on positionne et on fixe tout d'abord trois premiers organes femelles, respectivement 1, 2 et 3, aux endroits prévus à cet effet sur le cadre 10, de manière à constituer le plan de référence pour le montage de la batterie de traction. Le cadre 10 comprend également une zone 11 de localisation destinée à accueillir un quatrième organe femelle nécessaire au montage de la batterie de traction sur le cadre.

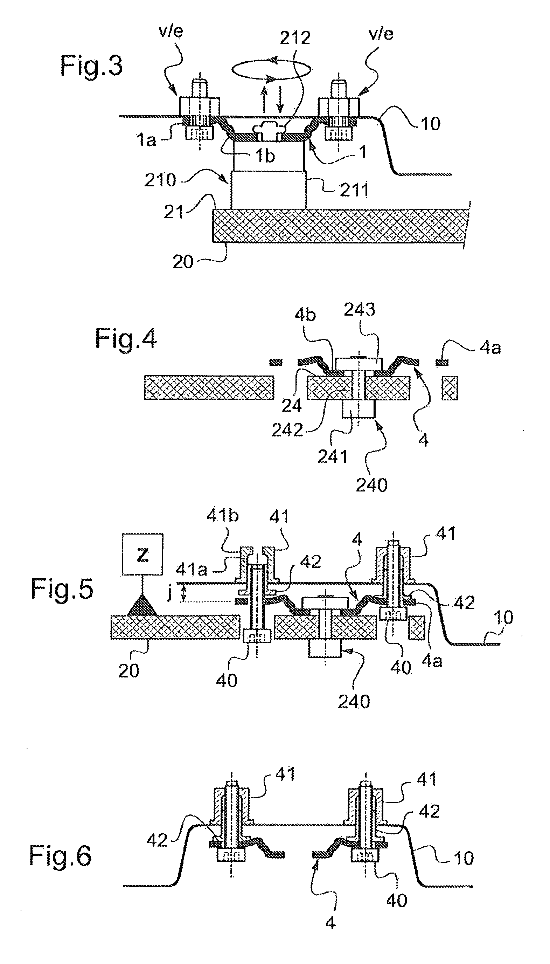

Chaque organe femelle, respectivement 1, 2 et 3, est par exemple constitué d'un socle, respectivement 1 a, 2a et 3a, et d'un corps, respectivement 1b, 2b et 3b, dont la face supérieure, opposée au socle, est munie d'une ouverture destinée à coopérer avec l'organe mâle correspondant du verrou de batterie. La face interne de chaque socle d'organe femelle est prévue pour être maintenue serrée en appui plan contre le cadre, au moyen par exemple de deux ensembles vis-écrou v/e (voir Figure 3) constitués chacun d'une vis de fixation traversant le socle et le cadre et d'un écrou venant en appui sur la face opposée du cadre, permettant de faire passer un effort de serrage suffisant aux besoins de l'application, par exemple 21 newtons-mètres.

Le cadre de batterie 10 est alors fixé lui-même sur la caisse. Le cadre de batterie et/ou la caisse sont alors susceptibles de se déformer au cours de cette opération, de sorte qu'un nouveau plan de référence passant par les trois organes femelles 1, 2 et 3 est obtenu, par rapport auquel le quatrième organe femelle devant être fixé sur le cadre 10 va pouvoir être positionné précisément, pour une fixation de ce quatrième organe sur le cadre dans le plan de référence des trois autres organes déjà fixés.

Pour ce faire, en référence à la figure 2, des moyens 20 de mise en position adaptés à positionner et à maintenir ce quatrième organe femelle dans le plan de référence sont mis en oeuvre. Ces moyens 20 de mise en position du quatrième organe femelle (non représenté à la figure 2) relativement au plan de référence constitué par les trois autres organes femelles 1, 2 et 3, se présentent sous la forme d'un gabarit de structure rigide, adapté à être placé en regard du cadre 10 et comprenant trois zones d'appui coplanaires, respectivement 21, 22 et 23, prévues pour venir en appui respectivement sur les trois organes femelles 1, 2 et 3, qui ont été préalablement positionnés sur le cadre 10 et, plus précisément, contre les faces supérieures des corps de ces organes femelles, de sorte que le gabarit 20 se trouve ainsi positionné précisément sur le plan de référence constitué des trois organes femelles 1, 2 et 3 précédemment fixés sur le cadre.

Le gabarit 20 doit être fermement maintenu dans le plan de référence. Pour ce faire, chaque zone d'appui 21, 22 et 23 est munie de moyens de fixation amovible à l'organe femelle correspondant, respectivement 1, 2 et 3, sur lequel elle vient en appui, permettant au gabarit 20 d'être fixé de manière amovible sur ces organes femelles au niveau de ses zones d'appui respectives.

Le détail de ces moyens de fixation est donné à la figure 3, illustrant la fixation amovible du gabarit 20 au niveau de sa zone d'appui 21 à l'organe femelle 1 précédemment fixé sur le cadre 10. Selon cet exemple de réalisation, les moyens de fixation amovible 210, solidaire de la zone d'appui 21, comprennent un organe quart de tour présentant un moyen de manoeuvre 211, qui se termine par une forme de verrouillage 212, telle qu'un doigt présentant toute forme appropriée pour coopérer avec l'ouverture prévue dans la face supérieure du corps 1 b de l'organe femelle 1 et ainsi verrouiller de manière amovible les moyens de fixation 210 de la zone d'appui 21 à l'organe femelle 1.

Le gabarit 20 comprend également une zone de maintien 24 située dans le même plan que les trois zones d'appui 21, 22 et 23, et permettant ainsi, lorsque le gabarit est positionné en appui contre les trois organes femelles 1, 2 et 3 précédemment fixés sur le cadre 10, de maintenir en position dans le plan de référence constitué de ces trois organes femelles 1, 2 et 3, le quatrième organe femelle devant être fixé sur le cadre 10. Ce quatrième organe femelle doit également être fermement maintenu sur le gabarit.

Pour ce faire, la zone de maintien 24 comprend des moyens de fixation amovible 240 adaptés à coopérer avec le quatrième organe femelle positionné sur la zone de maintien, pour fixer de manière amovible ce quatrième organe femelle sur le gabarit au niveau de la zone de maintien, en vue de sa fixation sur le cadre 10.

Le détail de ces moyens de fixation est donné à la figure 4, illustrant donc la fixation amovible du quatrième organe femelle 4 sur la zone de maintien 24 du gabarit 20. Comme les autres organes femelle précédemment fixés sur le cadre, le quatrième organe femelle 4 devant être fixé comprend un socle 4a dont la face interne est adaptée à être maintenue serrée en appui plan contre le cadre et un corps 4b dont la face supérieure, opposée au socle, est dotée d'une ouverture destinée à coopérer avec l'organe mâle correspondant du verrou de batterie. La face supérieure du corps 4b est positionnée sur la zone de maintien 24. Selon cet exemple de réalisation, les moyens de fixation amovible 240, comprennent un organe quart de tour présentant un moyen de manoeuvre 241, situé sur la face opposé du gabarit à celle accueillant la zone de maintien sur laquelle est positionnée la face supérieure de l'organe femelle et une tige 242 traversant le gabarit, qui se termine par une forme de verrouillage 243, telle qu'un doigt présentant toute forme appropriée pour coopérer avec l'ouverture prévue sur la face supérieure du corps 4b de l'organe femelle 4, et ainsi verrouiller de manière amovible le quatrième organe femelle 4 sur le gabarit au niveau de la zone de maintien.

Comme illustré à la figure 5, une fois le quatrième organe femelle 4 positionné et maintenu sur le gabarit 20, ce dernier est positionné sur les trois organes femelles 1, 2 et 3 déjà fixés sur le cadre batterie formant le plan de référence Z. Le gabarit 20 permet alors de maintenir le quatrième organe femelle 4 en position dans le plan de référence formé des autres organes femelles déjà positionnés sur le cadre 10.

Il est à noter que le jeu j entre le quatrième organe femelle 4 ainsi positionné et le cadre 10 est différent pour chaque véhicule. Les moyens de fixation du quatrième organe femelle 4 sur le cadre 10 comprennent avantageusement des moyens de rattrapage de jeu permettant de fixer le quatrième organe femelle à la position souhaitée définie par le gabarit en rattrapant automatiquement le jeu en question tout en permettant de faire passer la tension nécessaire dans l'assemblage.

Pour ce faire, selon l'exemple de la figure 5, le quatrième organe femelle est fixée au cadre au moyen de deux ensembles vis-écrou constitués chacun d'une vis de fixation 40 traversant le socle 4a de l'organe femelle 4 et d'un écrou fixe 41 solidaire du cadre 10. Cet écrou est par exemple soudé, serti ou clipsé sur le cadre, sur la face opposée du cadre à celle où la face interne du socle 4a est destinée à être maintenue serrée en appui plan.

Chaque ensemble vis-écrou pour la fixation du quatrième organe femelle sur le cadre est donc muni de moyens de rattrapage automatique du jeu j entre la face interne du socle du quatrième organe femelle positionnée par le gabarit et le cadre, adaptés à rattraper le jeu j lors du serrage des vis de fixation 40 de chaque ensemble vis-écrou.

Plus précisément, les moyens de rattrapage automatique de jeu comprennent un écrou mobile 42 de rattrapage de jeu à filetages intérieur et extérieur de pas respectivement opposés. L'écrou mobile 42 à double filetages est vissé dans l'écrou fixe 41 de serrage solidaire du cadre au niveau d'une partie 41 a de cet écrou fixe adaptée au filetage extérieur de l'écrou mobile. A la position initiale (non représentée à la figure 5), l'écrou mobile est vissé dans l'écrou fixe de sorte à venir en contact avec le cadre. Dans cette position initiale, aucun couple ne doit être appliqué entre cet écrou mobile 42 et la caisse.

Le quatrième organe femelle 4 étant positionné par le gabarit, on visse alors les vis de fixation 40 du quatrième organe femelle 4. Le diamètre intérieur de l'écrou mobile 42 est adapté au diamètre de la vis de fixation 40, de sorte que, lorsque la vis de fixation 40 rentre au contact de l'écrou mobile 42, celui-ci se déplace axialement par frottement dans l'écrou fixe 41 et descend jusqu'à venir en butée contre le socle 4a de l'organe femelle 4.

A ce stade, le socle 4a de l'organe femelle 4 maintenue en position par le gabarit 20 bloque l'écrou mobile 42 et la tension nécessaire à l'assemblage vissé est appliquée. A cet effet, l'écrou fixe 41 solidaire du cadre 10 comprend une seconde partie 41b adaptée au filetage de la vis de fixation 40. Ainsi, l'écrou mobile étant bloqué, la vis de fixation se met alors à monter et, lorsqu'elle est en prise avec la seconde partie 41 b de l'écrou fixe 41 et que la tension nominale, par exemple au moins 21 newtons-mètres, est atteinte, l'assemblage vissé est maintenu sous tension.

Le gabarit 20 doit avoir une structure suffisamment rigide pour éviter toute déformation lors du serrage des vis de fixation du quatrième organe femelle et ainsi garantir la position du quatrième organe femelle dans le plan de référence.

La figure 6 illustre alors le quatrième organe femelle 4, fixé sur le cadre 10 selon les principes exposés ci-dessus, en position géométrique coplanaire avec les trois autres organes femelles 1, 2 et 3 formant le plan de référence. En outre, les moyens de fixation avec rattrapage automatique de jeu du quatrième organe femelle permettent avantageusement de faire passer une tension suffisante dans l'assemblage susceptible de supporter les efforts de maintien de la batterie de traction à monter sur le cadre.

Grâce à cet agencement particulier pour le réglage en position et la fixation sur le cadre du quatrième organe femelle relativement au plan de référence formé par les trois autres organes femelles précédemment fixé sur le cadre, le verrouillage des quatre verrous de fixation de la batterie de traction est ainsi rendu possible sans déformation du cadre, lors du montage de la batterie sur celui-ci.

L'agencement qui vient d'être décrit peut en outre être utilisé pour d'autres éléments que la fixation d'organes femelles de verrous de batterie sur une caisse de véhicule automobile ou sur un cadre rapporté sur la caisse.

## Revendications

1. Dispositif pour le réglage en position et la fixation d'au moins une première partie d'organe de verrouillage (4) sur un support (10), ladite première partie d'organe de verrouillage (4) étant du type comportant un socle (4a) dont la face interne est adaptée à être maintenue serrée en appui plan contre ledit support au moyen d'au moins un ensemble vis-écrou et un corps (4b) relié audit socle apte à coopérer avec une seconde partie d'organe de verrouillage solidaire d'une pièce à assembler sur ledit support, pour réaliser l'assemblage de ladite pièce sur ledit support, **caractérisé en ce qu'**il comprend des moyens de mise en position (20) adaptés à positionner et maintenir ladite première partie d'organe de verrouillage (4) dans un plan de référence (Z) formé par trois autres premières parties d'organe de verrouillage correspondantes (1, 2, 3) positionnées sur ledit support, et **en ce que** ledit ensemble vis-écrou comprend des moyens de rattrapage automatique de jeu, adaptés à rattraper le jeu (j) entre ladite face interne dudit socle et ledit support lors du serrage dudit ensemble vis-écrou.

2. Dispositif selon la revendication 1, **caractérisé en ce que** lesdits moyens de rattrapage automatique de jeu comprennent un écrou mobile (42) de rattrapage de jeu à filetages intérieur et extérieur de pas respectivement opposés vissé dans une première partie de l'ensemble vis-écrou comportant un écrou fixe (41) de serrage solidaire dudit support au niveau d'une première partie (41a) dudit écrou fixe adaptée au filetage extérieur dudit écrou mobile, le filetage intérieur dudit écrou mobile étant adapté au filetage d'une vis de fixation (40) formant une deuxième partie de l'ensemble vis-écrou, de sorte que ledit écrou mobile (42) est adapté à se déplacer axialement dans ledit écrou fixe (41) solidaire dudit support lors du vissage de ladite vis de fixation pour venir en butée par une de ses extrémités libres contre ledit socle (4a) traversé par ladite vis de fixation.

3. Dispositif selon la revendication 2, **caractérisé en ce que** ledit écrou fixe (41) solidaire dudit support comprend une seconde partie (41b) adaptée au filetage de ladite vis de fixation (40), de sorte que ladite vis de fixation est adaptée à venir en prise avec ladite seconde partie dudit écrou fixe solidaire dudit support lorsque l'extrémité libre dudit écrou mobile est en butée avec ledit socle.

4. Dispositif selon la revendication 3, **caractérisé en ce que** ladite seconde partie dudit écrou fixe solidaire dudit support et ladite vis de fixation sont adaptés à définir un couple de serrage d'au moins 21 newtons-mètres.

5. Dispositif selon l'une quelconque des revendications 1 à 4, **caractérisé en ce que** lesdits moyens de mise en position (20) comprennent un gabarit rigide adapté à être placé en regard du support (10) et comprenant des zones d'appui coplanaires (21, 22, 23) adaptées à venir en appui respectivement sur lesdites trois autres premières parties d'organes de verrouillage correspondantes (1, 2, 3) positionnées sur ledit support et au moins une zone de maintien (24) située dans le même plan que lesdites zones d'appui et destinée à positionner et maintenir ladite première partie d'organe de verrouillage à fixer sur ledit support dans ledit plan de référence (Z).

6. Dispositif selon la revendication 5, **caractérisé en ce que** lesdites zones d'appui (21, 22, 23) comprennent des moyens de fixation amovible (210) adaptés à coopérer avec lesdites trois autres premières parties d'organe de verrouillage (1, 2, 3) pour fixer de manière amovible ledit gabarit sur lesdites trois autres premières parties d'organe de verrouillage au niveau desdites zones d'appui respectives.

7. Dispositif selon la revendication 5 ou 6, **caractérisé en ce que** ladite zone de maintien (24) comprend des moyens de fixation amovible (240) adaptés à coopérer avec ladite première partie d'organe de verrouillage (4) pour fixer de manière amovible ladite première partie d'organe de verrouillage sur ledit gabarit sur ladite zone de maintien.

8. Dispositif selon l'une quelconque des revendications précédentes, **caractérisé en ce que** ladite seconde partie d'organe de verrouillage comprend un organe mâle solidaire d'une batterie de traction d'un véhicule automobile et ladite première partie d'organe de verrouillage comprend un organe femelle prévu pour recevoir ledit organe mâle en engagement mutuel pour l'assemblage de ladite batterie de traction sur ledit support.

9. Dispositif selon l'une quelconque des revendications précédentes, **caractérisé en ce que** ledit support comprend une caisse de véhicule automobile ou un cadre de batterie fixé sur une caisse de véhicule automobile.

10. Procédé pour le réglage en position et la fixation d'au moins une première partie d'organe de verrouillage (4) sur un support (10), ladite première partie d'organe de verrouillage (4) étant prévue pour coopérer avec une seconde partie d'organe de verrouillage solidaire d'une pièce à assembler sur ledit support, pour réaliser l'assemblage de ladite pièce sur ledit support, ledit procédé étant **caractérisé en ce qu'**il comprend une étape préalable consistant à fixer trois autres premières parties d'organes de verrouillage correspondantes (1, 2, 3) sur ledit support, et **en ce qu'**il comprend les étapes suivantes consistant à maintenir en position ladite première partie d'organe de verrouillage (4) dans un plan de référence (Z) formé par lesdites trois autres premières parties d'organes de verrouillage correspondantes préalablement positionnées sur ledit support et à fixer sur ledit support ladite première partie d'organe de verrouillage (4) ainsi maintenue dans ledit plan de référence avec rattrapage automatique du jeu (j) entre ledit support et ladite première partie d'organe de verrouillage, de sorte que ladite première partie d'organe de verrouillage (4) est positionnée sur ledit support (10) dans ledit plan de référence des trois autres premières parties d'organes de verrouillage préalablement positionnées sur ledit support.

## Patentansprüche

1. Vorrichtung für die Positionseinstellung und Befestigung mindestens eines ersten Teils eines Verriegelungselements (4) auf einem Träger (10), wobei der erste Teil des Verriegelungselements (4) einen Sockel (4a), dessen Innenseite dazu geeignet ist, mit Hilfe mindestens einer Schraube-Mutter-Einheit an dem Träger fest flach anliegend gehalten zu werden, und einen Körper (4b) umfasst, der mit dem Sockel verbunden und geeignet ist, mit einem zweiten Teil des Verriegelungselements zusammenzuwirken, der mit einem auf dem Träger zu befestigenden Stück verbunden ist, um die Befestigung des Stücks auf dem Träger durchzuführen, **dadurch gekennzeichnet, dass** sie Mittel (20) zur Anordnung in Position umfasst, die geeignet sind, den ersten Teil eines Verriegelungselements (4) in einer Referenzebene (Z) zu positionieren und zu halten, die von drei weiteren entsprechenden Teilen eines Verriegelungselements (1, 2, 3), die auf dem Träger angeordnet sind, gebildet ist, und dass die Schraube-Mutter-Einheit Mittel zum automatischen Spielausgleich umfasst, die geeignet sind, das Spiel (j) zwischen der Innenseite des Sockels und dem Träger beim Anziehen der Schraube-Mutter-Einheit auszugleichen.

2. Vorrichtung nach Anspruch 1, **dadurch gekennzeichnet, dass** die Mittel zum automatischen Spielausgleich eine bewegliche Mutter (42) zum Spielausgleich mit Innen- und Außengewinde mit einer jeweils entgegengesetzten Steigung, die in einen ersten Teil der Schraube-Mutter-Einheit geschraubt ist, aufweisen, umfassend eine feste Feststellmutter (41), die mit dem Träger im Bereich eines ersten Teils (41a) der festen Mutter, der an das Außengewinde der beweglichen Mutter angepasst ist, verbunden ist, wobei das Innengewinde der beweglichen Mutter an das Gewinde einer Befestigungsschraube (40) angepasst ist, die einen zweiten Teil der Schraube-Mutter-Einheit bildet, so dass die bewegliche Mutter (42) dazu geeignet ist, sich axial in der festen Mutter (41), die mit dem Träger verbunden ist, beim Festschrauben der Befestigungsschraube zu verschieben, um mit einem ihrer freien Enden an dem Sockel (4a), durch den die Befestigungsschraube hindurchgeht, anzuschlagen.

3. Vorrichtung nach Anspruch 2, **dadurch gekennzeichnet, dass** die feste Mutter (41), die mit dem Träger verbunden ist, einen zweiten Teil (41b) umfasst, der an das Gewinde der Befestigungsschraube (40) angepasst ist, so dass die Befestigungsschraube dazu geeignet ist, mit dem zweiten Teil der festen Mutter, die mit dem Träger verbunden ist, in Eingriff zu gelangen, wenn das freie Ende der beweglichen Mutter am Sockel am Anschlag ist.

4. Vorrichtung nach Anspruch 3, **dadurch gekennzeichnet, dass** der zweite Teil der festen Mutter, die mit dem Träger verbunden ist, und die Befestigungsschraube dazu geeignet sind, ein Anzugsdrehmoment von mindestens 21 Newton-Meter zu definieren.

5. Vorrichtung nach einem der Ansprüche 1 bis 4, **dadurch gekennzeichnet, dass** die Mittel (20) zum Anordnen in Position eine starre Schablone umfassen, die dazu geeignet ist, gegenüber dem Träger (10) angeordnet zu werden, und umfassend koplanare Stützzonen (21, 22, 23), die dazu geeignet sind, jeweils auf den drei anderen entsprechenden ersten Teilen von Verriegelungselementen (1, 2, 3), die auf dem Träger angeordnet sind, zur Anlage zu gelangen, und mindestens eine Haltezone (24), die sich in derselben Ebene wie die Stützzonen befindet und dazu bestimmt ist, den ersten Teil eines auf dem Träger zu befestigenden Verriegelungselements in der Referenzebene (Z) anzuordnen und zu halten.

6. Vorrichtung nach Anspruch 5, **dadurch gekennzeichnet, dass** die Stützzonen (21, 22, 23) lösbare Befestigungsmittel (210) umfassen, die dazu geeignet sind, mit den drei anderen ersten Teilen eines Verriegelungselements (1, 2, 3) zusammenzuwirken, um die Schablone lösbar auf den drei anderen ersten Teilen eines Verriegelungselements im Bereich der jeweiligen Stützzonen zu befestigen.

7. Vorrichtung nach Anspruch 5 oder 6, **dadurch gekennzeichnet, dass** die Haltezone (24) lösbare Befestigungsmittel (240) umfasst, die dazu geeignet sind, mit dem ersten Teil eines Verriegelungselements (4) zusammenzuwirken, um den ersten Teil eines Verriegelungselements lösbar auf der Schablone in der Haltezone zu befestigen.

8. Vorrichtung nach einem der vorhergehenden Ansprüche, **dadurch gekennzeichnet, dass** der zweite Teil eines Verriegelungselements ein Einsteckelement umfasst, das mit einer Traktionsbatterie eines Fahrzeugs verbunden ist, und dass der erste Teil eines Verriegelungselements ein Aufnahmeelement umfasst, das dazu vorgesehen ist, das Einsteckelement durch gegenseitiges Ineinandergreifen für die Befestigung der Traktionsbatterie am Träger aufzunehmen.

9. Vorrichtung nach einem der vorhergehenden Ansprüche, **dadurch gekennzeichnet, dass** der Träger einen Fahrzeugkasten oder einen auf einem Kraftfahrzeugkasten montierten Batterierahmen umfasst.

10. Verfahren zur Positionsregulierung und Befestigung mindestens eines ersten Teils eines Verriegelungselements (4) auf einem Träger (10), wobei der erste Teil eines Verriegelungselements (4) dazu vorgesehen ist, mit einem zweiten Teil eines Verriegelungselements, das mit einem auf dem Träger zu befestigenden Stück verbunden ist, zusammenzuwirken, um die Befestigung des Stücks auf dem Träger durchzuführen, wobei das Verfahren **dadurch gekennzeichnet ist, dass** es einen vorherigen Schritt umfasst, der darin besteht, drei weitere erste entsprechende Teile von Verriegelungselementen (1, 2, 3) auf dem Träger zu befestigen, und dass es die folgenden Schritte umfasst, die darin bestehen, den ersten Teil eines Verriegelungselements (4) in einer Referenzebene (Z) zu halten, die von den drei anderen ersten entsprechenden Teilen von Verriegelungselementen gebildet ist, die vorher auf dem Träger angeordnet wurden, und auf dem Träger den ersten Teil eines Verriegelungselements (4) zu befestigen, der so in der Referenzebene mit einem automatischen Ausgleich des Spiels (j) zwischen dem Träger und dem ersten Teil eines Verriegelungselements gehalten wird, so dass der erste Teil eines Verriegelungselements (4) auf dem Träger (10) in der Referenzebene der drei anderen ersten Teile von Verriegelungselementen, die vorher auf dem Träger angeordnet wurden, positioniert wird.

## Claims

1. Device for the position-adjustment and attachment of at least one first locking member portion (4) on a support (10), said first locking member portion (4) being of the type comprising a base (4a) the internal face of which is designed to be held clamped in plane bearing engagement against said support by means of at least one nut-and-bolt assembly and a body (4b) connected to said base which is able to engage with a second locking member portion which is secured to a part to be assembled on said support so as to assemble said part on said support, **characterized in that** it comprises positioning means (20) designed to position and to hold said first locking member portion (4) in a reference plane (Z) formed by three other corresponding first locking member portions (1, 2, 3) positioned on said support, and **in that** said nut-and-bolt assembly comprises means for automatically compensating for play, designed to compensate for the play (j) between said internal face of said base and said support when tightening said nut-and-bolt assembly.

2. Device according to Claim 1, **characterized in that** said means for automatically compensating for the play comprise a movable play compensation nut (42) having interior and exterior threads of, respectively, opposite pitch screwed into a first portion of the nut-and-bolt assembly comprising a fixed clamping nut (41) which is secured to said support at a first portion (41a) of said fixed nut matching the exterior thread of said movable nut, the interior thread of said movable nut matching the thread of an attachment bolt (40) forming a second portion of the nut-and-bolt assembly, such that said movable nut (42) is designed to move axially in said fixed nut (41) which is secured to said support when said attachment bolt is screwed so as to abut at one of its free ends against said base (4a) through which said attachment bolt passes.

3. Device according to Claim 2, **characterized in that** said fixed nut (41) which is secured to said support comprises a second portion (41b) matching the thread of said attachment bolt (40), such that said attachment bolt is designed to interengage with said second portion of said fixed nut which is secured to said support when the free end of said movable nut abuts on said base.

4. Device according to Claim 3, **characterized in that** said second portion of said fixed nut which is secured to said support and said attachment bolt are designed to define a clamping torque of at least 21 newton-metres.

5. Device according to any one of Claims 1 to 4, **characterized in that** said positioning means (20) comprise a rigid template designed to be placed facing the support (10) and comprising coplanar bearing regions (21, 22, 23) designed to come to bear respectively on said three other corresponding first locking member portions (1, 2, 3) positioned on said support and at least one holding region (24) which is located in the same plane as said bearing regions and is designed to position and hold said first locking member portion to be attached on said support in said reference plane (2).

6. Device according to Claim 5, **characterized in that** said bearing regions (21, 22, 23) comprise removable attachment means (210) designed to engage with said three other first locking member portions (1, 2, 3) so as to removably attach said template on said three other first locking member portions at said respective bearing regions.

7. Device according to Claim 5 or 6, **characterized in that** said holding region (24) comprises removable attachment means (240) designed to engage with said first locking member portion (4) in order to removably attach said first locking member portion on said template on said holding region.

8. Device according to any one of the preceding claims, **characterized in that** said second locking member portion comprises a male member which is secured to a traction battery of a motor vehicle and said first locking member portion comprises a female member designed to receive said male member in mutual engagement to assemble said traction battery on said support.

9. Device according to any one of the preceding claims, **characterized in that** said support comprises a motor vehicle body or a battery frame attached to a motor vehicle body.

10. Method for the position-adjustment and attachment of at least one first locking member portion (4) on a support (10), said first locking member portion (4) being designed to engage with a second locking member portion which is secured to a part to be assembled on said support, so as to assemble said part on said support, said method being **characterized in that** it comprises a preliminary step consisting in attaching three other corresponding first locking member portions (1, 2, 3) on said support, and **in that** it comprises the following steps consisting in holding said first locking member portion (4) in position in a reference plane (Z) formed by said three other corresponding first locking member portions previously positioned on said support, and in attaching on said support said first locking member portion (4) held in this manner in said reference plane with automatic compensation for the play (j) between said support and said first locking member portion, such that said first locking member portion (4) is positioned on said support (10) in said reference plane of the three other first locking member portions previously positioned on said support.
